# DEMANDE DE BREVET EUROPEEN

(11) **EP 1 302 346 A1**
(43) Date de publication de la demande: **16.04.2003**
(21) Numéro de dépôt: 02292451.8
(22) Date de dépôt: 04.10.2002
(51) Int. Cl.: B60J 1/12, B60J 10/04

(54) **Léve-vitre de vitre arrière de cabriolet et procédé de montage correspondant**

(30) Priorité: 10.10.2001 FR 0113196
(71) Demandeur: Arvinmeritor Light Vehicle Systems-France, 45600 Sully sur Loire (FR)
(72) Inventeur: Cardine, Patrice, 45100 Orleans (FR)
(74) Mandataire: Cabinet Hirsch

(57) **Abrégé**

L'invention propose un procédé d'assemblage d'un lève-vitre (1) arrière sur un cabriolet comprenant les étapes de fourniture d'un châssis de cabriolet comprenant des panneaux intérieur (4) et extérieur (3) définissant un logement (2) ouvert sur le dessus, fourniture d'un lève-vitre, et insertion vers le bas du lève-vitre dans le logement par l'ouverture.

L'invention concerne également un kit comprenant un lève-vitre (1), un châssis de cabriolet présentant, un panneau extérieur (3) et un panneau intérieur (4) définissant un logement (2) ouvert sur le dessus, l'ouverture ayant des dimensions adéquates pour l'insertion vers le bas du lève-vitre dans le logement.

L'invention permet de faciliter l'assemblage d'un lève-vitre arrière et le réglage de la position transversale de la vitre correspondante dans un châssis de cabriolet.

## Description

L'invention concerne les lève-vitres automobiles, et en particulier les lève-vitres pour vitres arrière de cabriolet.

De nombreux modèles de cabriolets, dont la 206CC, comprennent un lève-vitre pour vitre arrière logé dans le châssis du véhicule entre des panneaux extérieur et intérieur de châssis fixés l'un par rapport à l'autre. L'assemblage du lève-vitre dans le châssis est réalisé de la manière suivante. On rapporte un lève-vitre muni d'une plaque support, à laquelle la vitre n'est pas assemblée. Ce lève-vitre est glissé suivant la direction transversale du véhicule dans un logement ménagé entre les panneaux intérieur et extérieur, à travers une découpe du panneau intérieur. Le lève-vitre est ensuite fixé au châssis, puis la vitre est fixée au lève-vitre. La vitre traverse alors une ouverture de même largeur que la vitre, ménagée entre les panneaux intérieurs et extérieurs.

Ce procédé de montage présente des inconvénients. En effet, le placement du lève-vitre dans le châssis est peu ergonomique : il nécessite qu'un opérateur placé à l'extérieur du véhicule glisse le lève-vitre par l'intérieur du véhicule. La plaque support présente en outre des dimensions importantes. Ces dimensions rendent d'autant plus difficile le placement du lève-vitre dans le logement du châssis. Ce procédé ne permet en outre pas de placer un lève-vitre muni d'une vitre dans le logement. Les phases d'assemblage du véhicule sont ainsi trop complexes.

Il existe donc un besoin pour un lève-vitre et procédé d'assemblage qui résolve un ou plusieurs des inconvénients mentionnés.

L'invention a ainsi pour objet un procédé d'assemblage d'un lève-vitre arrière sur un cabriolet comprenant les étapes de fourniture d'un châssis de cabriolet comprenant des panneaux intérieur et extérieur définissant un logement ouvert sur le dessus, de fourniture d'un lève-vitre; et d'insertion vers le bas du lève-vitre dans le logement par l'ouverture.

Selon une variante, l'ouverture est placée au niveau de la ligne de ceinture du châssis.

Selon encore une variante, le procédé comprend en outre une étape de fixation d'une vitre sur le lève-vitre avant la fourniture de celui-ci.

Selon une autre variante, le lève-vitre présente en outre un masque, l'insertion comprend une étape de placement du masque de sorte à obturer sensiblement l'ouverture.

Selon encore une autre variante, le procédé comprend en outre une étape de fixation du masque au panneau intérieur.

On peut en outre prévoir une étape de fixation d'un joint de vitre sur le lève-vitre.

Selon une variante, le joint est fixé sur le masque.

Selon une autre variante, le procédé comprend en outre une étape de fixation d'une garniture intérieure sur le lève-vitre.

Selon encore une variante, la garniture est fixée sur le masque.

Selon encore une autre variante, le procédé comprend une étape ultérieure de fixation du lève-vitre au châssis.

L'invention a également pour objet un kit comprenant un lève-vitre, un châssis de cabriolet présentant un panneau extérieur et un panneau intérieur définissant un logement ouvert sur le dessus, l'ouverture ayant des dimensions adéquates pour l'insertion vers le bas du lève-vitre dans le logement.

Selon une variante, le lève-vitre comprend en outre un masque susceptible d'obturer sensiblement l'ouverture.

Selon une autre variante, un joint de vitre est fixé sur le masque.

Selon encore une variante, une garniture intérieure est fixée sur le masque.

Selon encore une autre variante, le kit comprend en outre des moyens de réglage de la position transversale du lève-vitre par rapport au châssis.

D'autres caractéristiques et avantages de l'invention apparaîtront à la lecture de la description qui suit de modes de réalisation de l'invention, donnée à titre d'exemple et en référence aux dessins annexés qui montrent :
- figure 1, une vue en section transversale d'un cabriolet selon l'invention au niveau de sa vitre arrière;
- figure 2, une vue en coupe au niveau de la ligne en traits interrompus de la figure 1.

L'invention propose d'assembler un lève-vitre arrière dans un châssis de cabriolet présentant un panneau intérieur et un panneau extérieur définissant un logement. Le logement est ouvert sur le dessus. Le lève-vitre est inséré dans le logement vers le bas par l'ouverture ménagée.

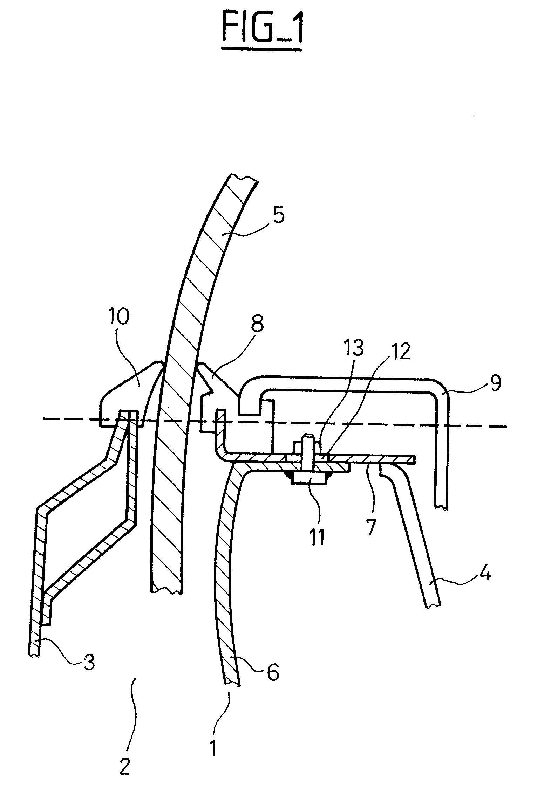

La figure 1 représente une vue en coupe transversale d'un cabriolet au niveau de la vitre arrière. Un lève-vitre 1 est disposé dans un logement 2. Le logement 2 est défini par un panneau extérieur 3 et un panneau intérieur 4. Ce logement présente une ouverture sur le dessus. L'ouverture est par exemple définie par un espace séparant les bords supérieurs respectifs des panneaux intérieur 4 et extérieur 3. Une vitre 5 est fixée sur une partie structurelle 6 du lève-vitre. Un joint 10 est fixé sur le panneau extérieur 3 et vient en contact avec la vitre 5 de façon à éviter les intrusions de corps étrangers dans le logement 2.

L'ouverture présente des dimensions appropriées permettant l'insertion du lève-vitre 1, ou au moins de la partie structurelle 6 dans le logement 2. Le lève-vitre peut ainsi être inséré aisément par un opérateur situé hors du véhicule. Le lève-vitre peut également être inséré dans le châssis en étant préalablement fixé à la vitre 5. Une ouverture transversale de 75 mm est par exemple suffisante pour insérer un lève-vitre dans le logement. L'ouverture est réalisée de préférence au niveau de la ligne de ceinture de la voiture, c'est-à-dire au niveau des joints de vitre, pour faciliter l'insertion.

On peut prévoir que le lève-vitre 1 présente un masque 7 qui assure l'étanchéité du logement 2. Le masque assure en particulier l'étanchéité du logement lorsque la vitre est en position haute. Le masque obture sensiblement l'ouverture. On peut ainsi prévoir que le masque ne ménage qu'un passage de vitre entre l'extérieur et le logement de lève-vitre. Le masque peut éventuellement servir de butée de positionnement lors de l'insertion du lève-vitre dans le logement. Le masque peut par exemple être réalisé de sorte à assurer un positionnement du lève-vitre longitudinal, vertical, transversal ou un positionnement suivant une combinaison de ces axes. On peut ainsi réaliser le masque sous forme de pièce rigide, par exemple en tôle métallique. On peut bien entendu utiliser facultativement des butées de positionnement annexes.

Le masque 7 peut être réalisé avec une pièce rapportée fixée sur la partie structurelle 6. Il peut également être réalisé monobloc avec cette partie structurelle, par estampage ou tout autre procédé adéquat. La pièce structurelle 6 peut pour sa part par exemple être réalisée sous forme de plaque.

On peut prévoir diverses autres fonctions pour le masque : le masque peut ainsi servir de support pour diverses pièces du lève-vitre ou du véhicule. On peut par exemple prévoir de fixer un joint de vitre 8 sur le masque 7. Le joint peut par exemple être maintenu par friction sur un repli du masque 7. On peut également prévoir de fixer une garniture intérieure 9 sur le masque ou sur le joint 8. La garniture intérieure peut par exemple comprendre un support plastique recouvert de textile destiné à masquer les composants du châssis et du lève-vitre. Ces variantes permettent de simplifier en particulier les panneaux intérieurs, qui sont utilisés dans l'état de la technique pour la fixation de ces différentes pièces.

Le masque 7 peut également servir à la fixation du lève-vitre par rapport au châssis. On peut ainsi prévoir de fixer le masque par rivetage, par soudure ou par vissage sur le panneau intérieur. On peut par exemple prévoir qu'un bord du masque repose sur le bord supérieur du panneau intérieur, comme cela est représenté à la figure 1. On peut alors prévoir de souder ou visser le masque au panneau intérieur au niveau de cette zone de contact. Cette variante facilite également l'assemblage du lève-vitre car l'accès au sommet de l'ouverture est aisé. On peut ainsi atteindre dans de bonnes conditions la zone de fixation. On peut bien entendu prévoir des moyens de fixation supplémentaires du lève-vitre sur le châssis. On peut ainsi prévoir de fixer le châssis au lève-vitre par tout moyen adéquat au niveau de leurs parties inférieures. On peut par exemple prévoir une ouverture dans la partie inférieure du châssis pour permettre l'introduction d'outils dans le logement.

La position transversale du masque, c'est-à-dire suivant la direction correspondant à la normale au plan moyen du panneau extérieur, est avantageusement réglable par rapport à la partie structurelle du lève-vitre. Un tel réglage permet notamment suivant les variantes, d'ajuster la position du joint 8 par rapport à la vitre ou d'ajuster la position de la garniture par rapport au châssis.

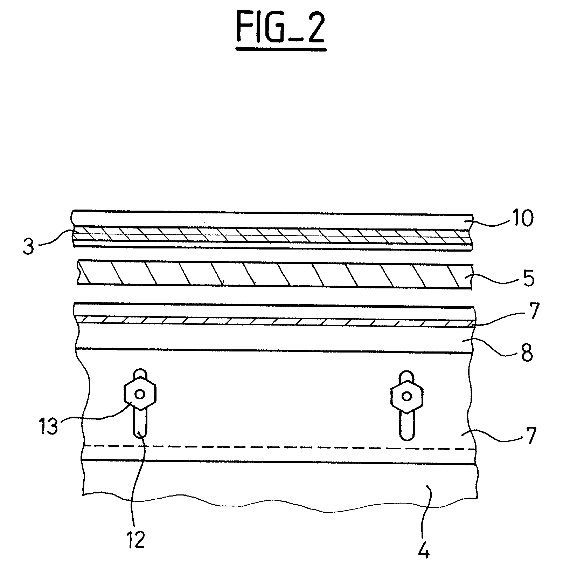

On peut prévoir tout moyen de réglage adéquat, tels qu'une liaison coulisse verrouillable entre la partie structurelle et le masque. Dans l'exemple de la figure 1, une vis sensiblement verticale 11 est fixée à la partie structurelle. Le corps de vis traverse un trou oblong 12 ménagé dans le masque. L'oblong est orienté dans la direction transversale du masque. Pour assurer le coulissement du masque par rapport à la partie structurelle, on peut prévoir deux liaisons de ce type avec des oblongs parallèles, comme cela est représenté à la figure 2. Lorsque le positionnement transversal relatif entre le masque et la partie structurelle est défini, il suffit de serrer un écrou 13 sur la vis 11 pour maintenir la position par friction.

Si on fixe d'abord le masque sur le panneau intérieur, il est alors possible d'assurer le réglage de la position du sommet de la vitre dans la direction transversale du véhicule en utilisant un tel système.

On peut prévoir les procédés d'assemblage suivants pour le lève-vitre :

On fournit un châssis de cabriolet comprenant des panneaux intérieur et extérieur définissant un logement ouvert sur le dessus, on fournit un lève-vitre, puis on insère vers le bas le lève-vitre dans le logement par l'ouverture.

On peut en outre prévoir une étape de fixation d'une vitre sur le lève-vitre avant la fourniture de celui-ci. Le montage de la vitre sur le lève-vitre est ainsi facilité. On peut prévoir un réglage de la position de la vitre lors de son montage sur le lève-vitre. Le réglage peut être réalisé suivant les directions transversale, longitudinale ou verticale. On peut par exemple effectuer le réglage en montant le lève-vitre sur un gabarit. Le réglage de la position de la vitre est ainsi effectif avant le montage du lève-vitre dans le châssis. De plus, ce réglage est aisé puisque l'opérateur dispose de plus d'espace, donc d'une ergonomie accrue par rapport à un réglage sur une chaîne de montage. On peut ainsi éventuellement se passer de réglage de la position de la vitre lors du montage du lève-vitre dans le véhicule. Le temps d'assemblage du lève-vitre dans le véhicule est ainsi réduit, ce qui permet d'assembler des cabriolets sur les mêmes lignes d'assemblage que des berlines.

Le lève-vitre peut en outre présenter un masque placé lors de l'étape d'insertion du lève-vitre de sorte à obturer sensiblement l'ouverture.

On peut encore prévoir une étape de fixation du masque au panneau intérieur, ou une étape de fixation d'un joint de vitre sur le lève-vitre ou éventuellement sur le masque. On peut prévoir d'assembler le joint 8 sur le masque avant l'assemblage du masque au lève-vitre.

On peut prévoir une étape de fixation d'une garniture intérieure sur le lève-vitre, éventuellement sur le masque.

On peut encore prévoir une étape ultérieure de fixation du lève-vitre au châssis.

Bien entendu, la présente invention n'est pas limitée aux exemples et modes de réalisation décrits et représentés, mais elle est susceptible de nombreuses variantes accessibles à l'homme de l'art.

## Revendications

1. Procédé d'assemblage d'un lève-vitre (1) arrière sur un cabriolet comprenant les étapes de :
- fourniture d'un châssis de cabriolet comprenant des panneaux intérieur (4) et extérieur (3) définissant un logement (2) ouvert sur le dessus ;
- fourniture d'un lève-vitre (1) présentant un masque (7);
- insertion vers le bas du lève-vitre (1) dans le logement (2) par l'ouverture ; et
- obturation sensible de l'ouverture par placement du masque (7) sur l'ouverture.

2. Le procédé d'assemblage de la revendication 1, **caractérisé en ce que** l'ouverture est placée au niveau de la ligne de ceinture du châssis.

3. Le procédé d'assemblage de la revendication 1 ou 2, **caractérisé en ce qu'**il comprend en outre une étape de fixation d'une vitre sur le lève-vitre avant la fourniture de celui-ci.

4. Le procédé d'assemblage de l'une des revendications précédentes, **caractérisé en ce qu'**il comprend en outre une étape de fixation du masque (7) au panneau intérieur (4).

5. Le procédé d'assemblage de l'une des revendications précédentes, **caractérisé en ce qu'**il comprend en outre une étape de fixation d'un joint (8) de vitre (5) sur le lève-vitre.

6. Le procédé d'assemblage de la revendication 5 lorsqu'elle dépend de la revendication 4 ou 5, **caractérisé en ce que** le joint (8) est fixé sur le masque (7).

7. Le procédé d'assemblage de l'une des revendications précédentes, **caractérisé en ce qu'**il comprend en outre une étape de fixation d'une garniture intérieure (9) sur le lève-vitre.

8. Le procédé d'assemblage de la revendication 7, **caractérisé en ce que** la garniture (9) est fixée sur le masque.

9. Le procédé d'assemblage de l'une des revendications précédentes, **caractérisé en ce qu'**il comprend une étape ultérieure de fixation du lève-vitre au châssis.

10. Kit comprenant :
- un lève-vitre (1) présentant un masque (7) ;
- un châssis de cabriolet présentant :
- un panneau extérieur (3) et un panneau intérieur (4) définissant un logement ouvert sur le dessus, l'ouverture ayant des dimensions adéquates pour l'insertion vers le bas du lève-vitre dans le logement (2) et le masque étant susceptible d'obturer sensiblement l'ouverture.

11. Le kit de la revendication 10, **caractérisé en ce qu'**un joint (8) de vitre est fixé sur le masque.

12. Le kit de la revendication 10 ou 11, **caractérisé en ce qu'**une garniture intérieure (9) est fixée sur le masque.

13. Le kit de l'une des revendications 10 à 12, **caractérisé en ce qu'**il comprend en outre des moyens de réglage (11, 12, 13) de la position transversale du lève-vitre par rapport au châssis.
